# EUROPÄISCHE PATENTSCHRIFT

(11) **EP 0 806 377 B1**
(45) Veröffentlichungstag und Bekanntmachung des Hinweises auf die Patenterteilung: **28.03.2001**
(21) Anmeldenummer: 97250144.9
(22) Anmeldetag: 28.04.1997
(51) Int. Cl.: B65G 13/075

(54) **Staurollenbahn**
Accumalating roller conveyor
Convoyeur accumulateur à rouleaux

(30) Priorität: 06.05.1996 DE 19619097; 08.07.1996 DE 19628711
(43) Veröffentlichungstag der Anmeldung: 12.11.1997
(73) Patentinhaber: Atecs Mannesmann AG, 40213 Düsseldorf (DE)
(72) Erfinder: Bonifer, Edgar, Dipl.-Ing., 64839 Münster (DE); Jahns, Werner, Dipl.-Ing., 63500 Seligenstadt (DE); Kratz, Helmut, 63110 Rodgau (DE)
(74) Vertreter: Meissner, Peter E., Dipl.-Ing.

(56) Entgegenhaltungen:
- EP-A- 0 640 540
- AT-A- 384 595
- DE-C- 3 817 388

## Beschreibung

Die Erfindung betrifft eine Staurollenbahn mit angetriebenen Tragrollen für das Fördergut gemäß dem Oberbegriff des Anspruchs 1.

Aus der deutschen Patentschrift DE 38 17 388 C1 ist eine Staurollenbahn bekannt, deren Tragrollen zum staudrucklosen Fördern von Fördergut abschnittsweise antreib- bzw. stillsetzbar sind. Der Antrieb erfolgt über einen endlos umlaufenden und in Förderrichtung verlaufenden Flachriemen, dessen Obertrum zur Übertragung der Antriebskräfte über Stützrollen von unten an die Tragrollen angedrückt werden kann. Hierzu sind die Stützrollen exzentrisch gelagert und jeweils in Förderrichtung gesehen im Bereich zwischen den mit Abstand aufeinanderfolgenden Tragrollen angeordnet, so daß im Antriebszustand die Stützrollen derart weit angehoben werden können, daß eine geringe Umschlingung der Tragrollen durch den Flachriemen erfolgt. Die Hubbewegung der Stützrolle erfolgt durch Verdrehung der exzentrischen Lagerung über einen hierzu radial angeordneten Hebel. Die Hebel eines Abschnittes der Staurollenbahn sind jeweils an einer gemeinsamen Betätigungsleiste angelenkt, die über einen Pneumatikzylinder in bzw. gegen die Förderrichtung der Staurollenbahn verschiebbar sind, um somit die Stützrollen eines Abschnittes gemeinsam anzuheben oder abzusenken.

Das Abbremsen der Rollen erfolgt über einen Bremsgurt, der parallel zu dem Antriebsgurt verläuft und an seinen Enden fest eingespannt ist. Für ein Abbremsen der Tragrollen wird der Bremsgurt in entsprechender Weise wie der Antriebsgurt über weitere Stützrollen von unten an die Tragrollen angedrückt. Die Stützrollen für den Brems- und Antriebsgurt sind auf einer gemeinsamen Welle derart exzentrisch gelagert, daß je nach Stellung des Hebels entweder die Stützrolle für den Antriebsgurt oder die Stützrolle für den Bremsgurt sich im angehobenen bzw. abgesenkten Zustand befinden.

Diese Antriebsart für die Staurollenbahnabschnitte hat sich bei einer Vielzahl von Einsatzfällen bewährt. Es können jedoch Probleme auftreten, wenn Fördergüter mit hohem Gewicht in kurzer Zeit abgebremst und zusätzlich gleichzeitig mehrere Staurollenbahnabschnitte stillgesetzt werden sollen, da über hierdurch hervorgerufene Dehnungen im Bremsgurt eine Verlängerung des Bremsweges auftreten kann.

Des weiteren ist aus der deutschen Offenlegungsschrift DE 44 09 968 A1 ein Bausatz zum Bremsen von Tragrollen von Rollenförderern bekannt. Dieser Bausatz soll sich zum nachträglichen Einbau in bereits bestehende Rollenförderer mit antreibbaren und frei drehenden Tragrollen, insbesondere von Staurollenförderern eignen und besteht im wesentlichen aus Bremslamellen zum Abbremsen der Tragrollen. Die Bremslamelle ist hierzu jeweils auf einen verschwenk- oder verschiebbaren Lamellenhalter befestigt, der auf das in oder außer Eingriff mit der jeweiligen Tragrolle bringbare Antriebsmittel montiert ist.

Ferner ist in der deutschen Patentschrift DE 37 38 587 C2 eine Staurollenbahn beschrieben, deren Tragrollen gemeinsam bzw. gruppenweise angetrieben sind und jeder Tragrolle eine eigene Bremsvorrichtung zugeordnet ist. Diese Bremsvorrichtung besteht im wesentlichen aus einem Bremsbelag, der auf einem Bremsbelagträger angeordnet ist. Der Bremsbelag weist durchgehend eine gleiche Materialstärke auf und ist entsprechend dem Krümmungsradius der Tragrollen ausgebildet. Der Bremsbelagträger mit dem Bremsbelag ist über ein Betätigungselement in Richtung der Tragrolle anstellbar.

Der vorliegenden Erfindung liegt die Aufgabe zugrunde, eine Staurollenbahn mit Bremselementen zu schaffen, die eine optimierte Bremsleistung bietet.

Diese Aufgabe wird bei einer Staurollenbahn mit über angetriebenen Tragrollen für das Fördergut durch die im Anspruch 1 aufgeführten Merkmale gelöst. Vorteilhafte Ausgestaltungen der Erfindung sind in den Unteransprüchen 2 bis 11 angegeben.

Erfindungsgemäß wird durch die Führung der Bremselemente zum Abbremsen der Tragrollen der Staurollenbahn auf einer vorgegebenen Bewegungsbahn, die mindestens in der letzten weitgehend tangential zur Oberfläche der Tragrollen sowie in deren Drehrichtung erfolgenden Phase zu einer Stauchung der Bremselemente zwischen der Oberfläche der Tragrolle und dem Tragelement führt, erreicht, daß sich die Bremselemente von den Tragrollen durch Reibschluß mitgenommen und auf dem Tragelement abstützend in dem Spalt zwischen der Tragrollenoberfläche und dem Tragelement verkeilen und somit der Anpreßdruck des Bremselementes auf die Oberfläche der Tragrolle optimiert wird. Hierdurch ist ein schnelles und leises Abbremsen der Fördergüter möglich.

Um eine derartige Anstellbewegung für die Bremselemente zu erhalten, eignen sich vorzugsweise auf Tragelementen angeordnete Bremselemente, die über einen Exzenterantrieb zunächst erst weitgehend in Richtung der Oberfläche der Tragrolle und anschließend weitgehend tangential zur Oberfläche der Tragrolle sowie in deren Drehrichtung bewegt werden. Im Bereich der tangentialen Bewegung zur Oberfläche der Tragrolle kommt es zu der gewünschten Stauchung des Bremselementes, da sich der Abstand zwischen dem Tragelement und der Tragrollenoberfläche verringert und/oder die wirksame Belagstärke des Bremselementes zunimmt.

Als konstruktiv besonders einfach erweist sich die Ausbildung der Exzenterantriebe aus einer exzentrisch gelagerten Exzenterscheibe, an der radial angreifend ein Hebel befestigt ist, dessen der Exzenterscheibe abgewandtes Ende zum Verdrehen der Exzenterscheibe mit einem insbesondere als Pneumatikzylinder ausgebildeten Linearantriebsmittel verbunden ist. Als bevorzugter Einbauort für die Bremselemente hat sich die Anordnung an der dem Fördergut abgewandten Hälfte und weitgehend an der in Förderrichtung gesehen hinteren Seite der Tragrolle erwiesen, da hierdurch die für den Staucheffekt erforderliche weitgehend tangential zur Tragrollenoberfläche folgende letzte Bewegungsphase vorzugsweise nahezu parallel und entgegen zur Förderrichtung erfolgen kann. Hierdurch wird es unter anderem vereinfacht, mehrere in Förderrichtung gesehen aufeinanderfolgende Bremselemente auf einem gemeinsamen Tragelement anzuordnen, das vorzugsweise als in Förderrichtung und unterhalb der Tragrollen verlaufende Leiste ausgebildet ist. Für den Antrieb einer derartigen Leiste mit mehreren Bremselementen sind vorzugsweise nur zwei in Förderrichtung gesehen voneinander beabstandete Exzenterantriebe erforderlich, deren Exzenterscheiben zur Übertragung der exzentrischen Bewegung auf das Tragelement in einer Öffnung des Tragelementes gelagert sind.

Eine weitere Verbesserung der Bremsleistung wird durch die Ausbildung der Öffnungen in dem Tragelement als Langlöcher, deren Längserstreckung parallel zu der tangentialen Bewegungsrichtung des Tragelementes ausgerichtet ist, erreicht, da hierdurch das Tragelement nach Erfassen des Bremselementes durch die Oberfläche der Tragrolle impulsartig in Drehrichtung, d. h. weitgehend tangential zur Tragrollenoberfläche gezogen wird, bis die Exzenterscheibe an dem anderen Ende des Langloches anliegt. Hierdurch wird der gewünschte Staucheffekt optimiert. Um nach dem erfolgten Bremsvorgang das Tragelement innerhalb der Langlöcher in Förderrichtung zurückzustellen, ist ein Federelement vorgesehen, das zwischen dem Tragelement und der Exzenterscheibe angeordnet ist. Zur Erzielung des Staucheffektes ist vorrichtungsgemäß vorgesehen, daß die der Tragrolle zugewandte Bremsfläche des Bremselementes entgegen der Drehrichtung der Tragrolle gesehen und relativ zu der weitgehend tangentialen Bewegung des Tragelementes gesehen ansteigend ausgebildet ist. Hierdurch wird bei zunehmender Bewegung des Bremselementes in der tangentialen Richtung die Flächenpressung zwischen der Tragrollenoberfläche und dem Tragelement erhöht. Der zwischen der Tragrollen zugewandten Bremsfläche des Bremselementes und der weitgehend tangentialen Bewegungsrichtung des Tragelementes, der in etwa mit der Längserstreckung des Tragelementes übereinstimmt, eingeschlossene Winkel beträgt etwa 5° - 10°. Als Werkstoff für die Bremselemente hat sich Polyurethan-Elastomer als vorteilhaft herausgestellt.

Die Erfindung wird nachfolgend anhand eines in einer Zeichnung dargestellten Ausführungsbeispieles näher beschrieben. Es zeigen:
- Figur 1: eine Seitenansicht eines Abschnittes einer Staurollenbahn mit Tragrollen im ungebremsten Zustand,
- Figur 2: eine Seitenansicht gemäß Figur 1 mit Tragrollen im gebremsten Zustand und
- Figur 3: eine Schnittansicht von Figur 1 entlang der Schnittlinie I - I.

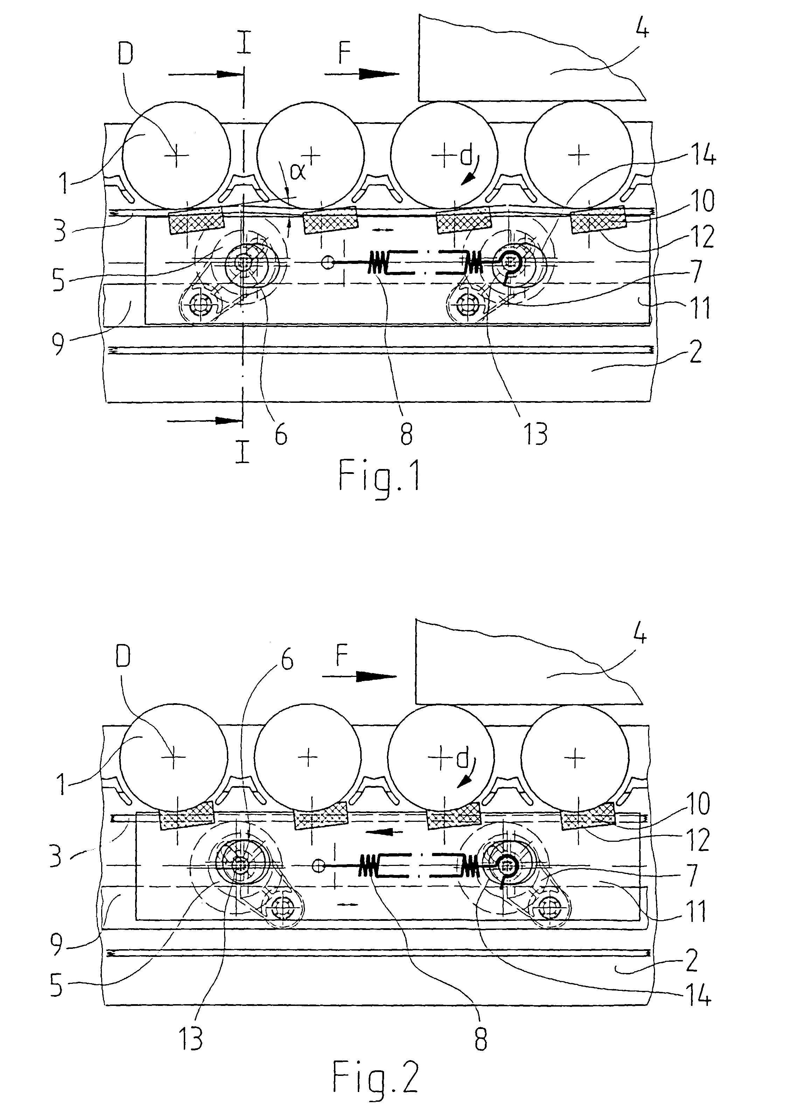

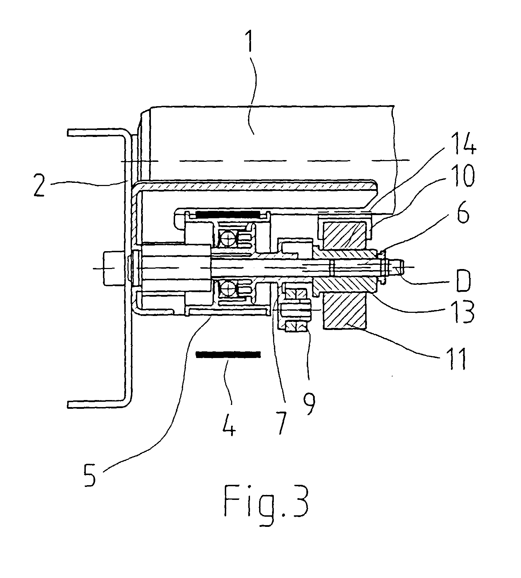

Die Figur 1 zeigt eine Seitenansicht eines Abschnittes einer Staurollenbahn mit Tragrollen 1 im ungebremsten Zustand. Die Staurollenbahn besteht im wesentlichen aus zwei U-förmigen Längsträgern 2 (siehe Figur 3), deren offene Seiten voneinander abgewandt sind. Zwischen sowie an den Längsträgern 2 sind die Tragrollen 1 gelagert, die eine ebene Auflagefläche für das Fördergut 4 bilden und deren Drehachsen D quer zur Förderrichtung F sowie horizontal verlaufen.

Jede Tragrolle 1 ist über einen insbesondere als Flachgurt ausgebildeten Antriebsgurt 3 in Drehrichtung d antreibbar. Hierzu ist der Antriebsgurt 3 endlos umlaufend ausgebildet, wobei das obere Trum von unten an die Tragrollen 1 anliegend (siehe Figur 3) die Tragrollen 1 über Reibschluß mitnimmt. Dieser Reibschluß zwischen dem Antriebsgurt 3 und den Tragrollen 1 wird durch Anheben des Obertrums des Antriebsgurtes 3 in Richtung der Tragrollen über Stützrollen 5 erreicht, die in Förderrichtung F gesehen, jeweils zwischen den aufeinanderfolgenden Tragrollen 1 angeordnet sind und somit im angehobenen Zustand über das Niveau der von den Tragrollen gebildeten unteren Begrenzungsebene hinaus angehoben werden können. Hierdurch wird ein in Seitenansicht gesehen wellenförmiger Verlauf des Antriebsgurtes 3 erreicht und somit durch die vergrößerte Umschlingung der Tragrollen 1 eine optimierte Übertragung der Antriebsleistung erreicht. Die für die Übertragung der Antriebskräfte bzw. deren Unterbrechung erforderlichen Hub- und Senkbewegungen der Stützrollen 5 erfolgen über einen Exzenterantrieb, der im wesentlichen aus einer exzentrischen Lagerung der Stützrollen 5 auf einer Achse 6 und einen radial zur Achse 6 der Stützrollen 5 sowie mit den Stützrollen 5 verbundenen Hebel 7, an dessen der Stützrolle 5 abgewandten Ende ein insbesondere als Pneumatikzylinder ausgebildetes und in der Zeichnung nicht dargestelltes Linearantriebsmittel angreift. Da die Staurollenbahn zum staudrucklosen Anhalten des Fördergutes 4 in getrennt voneinander antreib- und bremsbare Abschnitte unterteilt ist, deren Länge an das zu fördernde Fördergut 4 angepaßt ist, sind die Stützrollen 5 eines Staurollenbahnabschnittes über ein gemeinsames Linearantriebsmittel heb- und senkbar. Hierzu sind die jeweiligen Hebel 7 der Stützrollen 5 mit Ihren Enden gelenkig an einer im wesentlichen in bzw. gegen Förderrichtung F bewegbaren Schubleiste 9 angelenkt sind, die ihrerseits über das Linearantriebsmittel bewegbar ist.

Des weiteren ist jede Tragrolle 1 zum Abbremsen des Fördergutes 4 über ein Bremselement 10 anhaltbar, das quaderförmig ausgebildet und aus Polyurethan-Elastomer hergestellt ist. Die Bremselemente 10 eines Staurollenabschnittes sind auf einem gemeinsamen Tragelement 11, das als in Förderrichtung F verlaufende Leiste ausgebildet ist, angeordnet. Die Befestigung der Bremselemente 10 auf dem Tragelement 11 erfolgt formschlüssig in Aussparungen 12 auf der Oberseite des Tragelementes 11, die zu der Form der Bremselemente 10 korrespondieren. Zum Anlegen der Bremselemente 10 an die Oberflächen der Tragrollen 1 ist das Tragelement 11 ebenfalls über Exzenterantriebe heb- und senkbar ausgebildet. Der Exzenterantrieb besteht im wesentlichen jeweils aus einer Exzenterscheibe 13, die exzentrisch auf der Achse 6 gelagert ist und über den Hebel 7 der Stützrolle 5 verschwenkbar ist. Auf der Exzenterscheibe 13 ist das Tragelement 11 in einer korrespondierend ausgebildeten Öffnung 14 gelagert. Für jedes Tragelement 11 sind zwei in Förderrichtung voneinander beabstandet angeordnete Exzenterscheiben 13 vorgesehen. Durch diesen Exzenterantrieb sind die Bremselemente 10 zunächst weitgehend in Richtung der Oberflächen der Tragrollen 1 bewegbar. Mit zunehmender Anstellbewegung geht diese Bewegung in eine tangential zur Oberfläche der Tragrollen 1 sowie in deren Drehrichtung verlaufende Richtung über, so daß im letzten Bereich der Anstellbewegung die Bremselemente 10 zwischen den Oberflächen der Tragrollen 1 und dem Tragelement 11 eingeklemmt werden. Hierdurch wird die Anpreßkraft der Bremselemente 10 an die Oberfläche der Tragrollen 1 wirksam erhöht. Das Einklemmen bzw. Stauchen der Bremselemente 10 wird dadurch hervorgerufen, daß in Richtung der weitgehend tangential zur Oberfläche der Tragrollen 1 verlaufenden Anstellbewegung der Bremselemente 10, die im vorliegendem Fall weitgehend horizontal ist, die der Tragrollen 1 zugewandte Oberfläche der Bremselemente 10 zur Tragrolle 1 hin geneigt ist. Im vorliegenden Fall beträgt der zwischen der Oberfläche der Bremselemente 10 und der im letzten Abschnitt der Anstellbewegung weitgehend tangential zur Oberfläche der Tragrollen 1 verlaufenden Bewegungsrichtung eingeschlossene Winkel α 5° - 10°, vorzugsweise 7°. Diese Randbedingungen werden u. a. dadurch geschaffen, daß die Bremselemente 10 bei horizontal verlaufender Staurollenbahn gesehen von unten sowie in Förderrichtung F gesehen von hinten an die Tragrollen 1 anstellbar sind. Außerdem wird die Bremswirkung durch die Anstellung der Bremselemente 10 in Drehrichtung der jeweiligen Tragrolle 1 durch eine Art Mitnahmeeffekt für das Bremselement 10 begünstigt, da hierdurch die Klemmwirkung erhöht wird.

Eine Optimierung des Staucheffektes des Bremselementes wird durch eine Verlängerung des letzten Bewegungsabschnittes erreicht. Hierzu ist das Tragelement 11 für die Bremselemente 10 zusätzlich in und gegen die weitgehend tangentiale Anstellbewegungsrichtung der Bremselemente 10 verschiebbar, d. h. in bzw. gegen Förderrichtung F auf den Exzenterscheiben 13 verschiebbar. Die verschiebbare Lagerung ist durch als Langloch ausgebildete Öffnungen 14 verwirklicht, deren Längserstreckung in bzw. gegen Förderrichtung F ausgerichtet ist. Damit das Tragelement 11 im ungebremsten Zustand der Staurollenbahn sich in einer definierten Ausgangslage auf den Exzenterscheiben 13 befindet, ist zwischen den Exzenterscheiben 13 und dem Tragelement 11 ein Federelement 15 vorgesehen, über das das Tragelement 11 nach Lösen der Bremselemente in die Ausgangslage zurückbewegt wird

Nachfolgend wird anhand der Figuren 1 und 2, die jeweils eine Seitenansicht eines Abschnittes einer Staurollenbahn mit Tragrollen 1 im ungebremsten (siehe Figur 1) sowie im gebremsten Zustand (siehe Figur 2) zeigen, ein Abbremsvorgang des Fördergutes 4 näher erläutert. Ausgehend von der Stellung des Tragelementes 11 gemäß Figur 1, in der die Tragrollen 1 über den Antriebsgurt 3 angetrieben werden und die Bremselemente 10 von den Tragrollen 1 abgehoben sind, wird zur Einleitung des Abbremsvorganges über das Linearantriebsmittel die Schubleiste 9 in Förderrichtung F verschoben. Hierdurch werden über die Hebel 7 die Stützrollen 5 sowie die Exzenterscheiben 13 (siehe insbesondere Figur 3) auf ihren gemeinsamen Achsen 6 verdreht, wodurch die Stützrollen 5 von den Tragrollen 1 weg und das Tragelement 11 mit den Bremselementen 10 auf einer kreisbogenförmigen Bahn zu den Oberflächen der Tragrollen 1 hin bewegt werden. Auf dieser kreisbogenförmigen Bahn werden die Bremselemente 10 bei einer waagerecht verlaufenden Staurollenbahn gesehen etwa 3 mm senkrecht nach oben sowie etwa 1 mm entgegen der Förderrichtung F bewegt. Zu dem Zeitpunkt an dem die Bremselemente 10 den ersten Kontakt mit der Oberfläche jeder Tragrolle 1 haben, werden die Bremselemente 10 von den Tragrollen 1 über Reibschluß in deren Drehrichtung mitgenommen und somit das Tragelement 11 in seinen als Langloch ausgebildeten Öffnungen 14 schlagartig entgegen der Förderrichtung F auf den Exzenterscheiben 13 um etwa weitere 3 mm verschoben. Da die Bremselemente 10 derartig ausgebildet sind, daß diese die Wirkung von Keilen haben, wird durch die zusätzliche Schubbewegung des Tragelementes 11 die Anpreßkraft zwischen den Bremselementen 10 und den Oberflächen der Tragrollen 1 erhöht. Für die Anstellbewegung des Tragelementes 10 werden die Hebel 7 auf der Achse 6 in etwa um 90° über die Schubleiste 9 verschwenkt.

Zum Lösen der Bremselemente 10 von den Tragrollen 1 werden die Exzenterscheiben 13 in entgegengesetzter Richtung verdreht. Somit werden die Bremselemente 10 auf der kreisbogenförmigen Bahn wieder von den Tragrollen 1 gelöst und das Tragelement gleitet auf den Exzenterscheiben 13 in Ihren als Langloch ausgebildeten Öffnungen 14 in Förderrichtung F. Diese Bewegung wird über die Federelemente 15 bewirkt.

Ferner ist der Figur 3, die einen Schnitt durch die Figur 1 entlang der Schnittlinie I - I zeigt, zu entnehmen, daß die Exzenterscheiben 13 und die Stützrollen 5 auf einer gemeinsamen Achse 6 gelagert und über jeweils einen gemeinsamen Hebel 7 auf der Achse drehbar sind.

## Patentansprüche

1. Staurollenbahn mit angetriebenen Tragrollen (1) für das Fördergut und durch Verstellmittel an die Tragrollen anlegbaren und von diesen lösbaren Bremselementen (10) die auf Tragelementen (11) befestigt sind und sich an den Tragelementen abstützen, wobei die Bremselemente zum Abbremsen der Tragrollen jeweils auf einer vorgegebenen exzenterartigen Bewegungsbahn in Drehrichtung der Tragrollen und gegen deren Oberfläche bewegbar sind,
dadurch gekennzeichnet,
daß die Bremselemente (10) zunächst weitgehend in Richtung der Oberfläche der Tragrolle (1) und anschließend weitgehend tangential zur Oberfläche der Tragrolle (1) bewegbar sind und mindestens in der letzten weitgehend tangential zur Oberfläche der Tragrollen (1) erfolgenden Phase der Bewegung zwischen der Oberfläche der Tragrolle (1) und dem Tragelement (11) gestaucht werden.

2. Staurollenbahn nach Anspruch 1,
dadurch gekennzeichnet,
daß die Bremselemente (10) über einen Exzenterantrieb zum Abbremsen der Tragrollen (1) bewegbar sind.

3. Staurollenbahn nach Anspruch 2,
dadurch gekennzeichnet,
daß jeder Exzenterantrieb im wesentlichen aus einer Exzenterscheibe (13) und einem hieran radial angreifenden Hebel (7) besteht, dessen der Exzenterscheibe (13) abgewandtes Ende zum Verdrehen der Exzenterscheibe (13) mit einem Linearantriebsmittel verbunden ist.

4. Staurollenbahn nach einem der Ansprüche 1 bis 3,
dadurch gekennzeichnet,
daß die Bremselemente (10) jeweils an der dem Fördergut (4) abgewandten Hälfte der Tragrollen (1) und weitgehend an die in Förderrichtung (F) gesehen hintere Seite der Tragrollen (1) anlegbar sind.

5. Staurollenbahn nach einem der Ansprüche 1 bis 4,
dadurch gekennzeichnet,
daß mehrere in Förderrichtung (F) gesehen aufeinanderfolgende Bremselemente (10) auf einem gemeinsamen Tragelement (11) angeordnet sind, das als in Förderrichtung (F) verlaufende und unterhalb der Tragrollen (1) verlaufende Leiste (9) ausgebildet ist und die weitgehend tangential verlaufende Bewegung der Bremselemente (10) parallel zur Förderrichtung (F) gerichtet ist.

6. Staurollenbahn nach Anspruch 5,
dadurch gekennzeichnet,
daß je Tragelement (11) zwei in Förderrichtung voneinander beabstandete Exzenterantriebe vorgesehen sind.

7. Staurollenbahn nach einem der Ansprüche 1 bis 6,
dadurch gekennzeichnet,
daß in dem Tragelement (11) mindestens eine Öffnung (14) zur Aufnahme einer Exzenterscheibe (13) angeordnet ist.

8. Staurollenbahn nach Anspruch 7,
dadurch gekennzeichnet
daß die Öffnung (14) in dem Tragelement (11) als Langloch ausgebildet ist, das mit seiner Längserstreckung parallel zur tangentialen Bewegungsrichtung des Tragelements (11) ausgerichtet ist, und das Tragelement (11) über ein an der Exzenterscheibe (13) angreifendes Federelement (8) in Förderrichtung vorgespannt ist.

9. Staurollenbahn nach einem der Ansprüche 1 bis 8,
dadurch gekennzeichnet,
daß die der Tragrolle (11) zugewandte Bremsfläche des Bremselements (10) gegen die Drehrichtung (d) der Tragrolle (1) und relativ zu der weitgehend tangentialen Bewegung des Tragelements (11) gesehen ansteigt.

10. Staurollenbahn nach Anspruch 9,
dadurch gekennzeichnet,
daß der zwischen der der Tragrolle (1) zugewandten Bremsfläche des Bremselements (10) und zu der weitgehend tangentialen Bewegungsrichtung des Tragelements (11) eingeschlossene Winkel (a) etwa zwischen 5° und 10° beträgt.

11. Staurollenbahn nach einem der Ansprüche 1 bis 10,
dadurch gekennzeichnet,
daß die Bremselemente (10) aus Polyurethan-Elastomer hergestellt sind.

## Claims

1. Accumulating roller conveyor with driven supporting rollers (1) for the material being conveyed and braking elements (10) which can be applied to the supporting rollers and separated from the latter by displacement means, are secured to supporting elements (11) and are supported at the supporting elements, wherein the braking elements can in each case be moved along a predetermined, eccentric-like path of movement in the direction of rotation of the supporting rollers and against the surface thereof in order to brake the supporting rollers,
characterised in
that the braking elements (10) can firstly be moved largely in the direction of the surface of the supporting roller (1) and then largely tangentially to the surface of the supporting roller (1) and are compressed between the surface of the supporting roller (1) and the supporting element (11) at least in the final phase of movement taking place largely tangentially to the surface of the supporting rollers (1).

2. Accumulating roller conveyor according to Claim 1,
characterised in
that the braking elements (10) can be moved via an eccentric drive in order to brake the supporting rollers (1).

3. Accumulating roller conveyor according to Claim 2,
characterised in
that each eccentric drive essentially consists of an eccentric disc (13) and a lever (7) which acts radially on the latter and whose end which is remote from the eccentric disc (13) is connected to a linear drive means in order to rotate the eccentric disc (13).

4. Accumulating roller conveyor according to any one of Claims 1 to 3,
characterised in
that the braking elements (10) can in each case be applied to the half of the supporting rollers (1) which is remote from the material (4) being conveyed and, viewed in the conveying direction (F), largely to the rear side of the supporting rollers (1).

5. Accumulating roller conveyor according to any one of Claims 1 to 4,
characterised in
that a plurality of braking elements (10), which follow one another when viewed in the conveying direction (F), are disposed on a common supporting element (11) which is formed as a strip (9) which extends in the delivery direction (F) and below the supporting rollers (1), and the movement, which is largely tangential, of the braking elements (10) is directed parallel to the conveying direction (F).

6. Accumulating roller conveyor according to Claim 5,
characterised in
that two eccentric drives, which are spaced apart in the conveying direction, are provided for each supporting element (11).

7. Accumulating roller conveyor according to any one of Claims 1 to 6,
characterised in
that at least one opening (14) for accommodating an eccentric disc (13) is disposed in the supporting element (11).

8. Accumulating roller conveyor according to Claim 7,
characterised in that the opening (14) in the supporting element (11) is formed as an oblong hole which is directed with its longitudinal extent parallel to the tangential direction of movement of the supporting element (11), and the supporting element (11) is preloaded in the conveying direction via a spring element (8) acting on the eccentric disc (13).

9. Accumulating roller conveyor according to any one of Claims 1 to 8,
characterised in that the braking surface of the braking element (10) which is turned towards the supporting roller (11) rises when viewed against the direction of rotation (d) of the supporting roll (1) and relative to the largely tangential movement of the supporting element (11).

10. Accumulating roller conveyor according to Claim 9,
characterised in
that the angle (α) formed between the braking surface of the braking element (10) which is turned towards the supporting roller (1) and the largely tangential direction of movement of the supporting element (11) is approximately between 5° and 10°.

11. Accumulating roller conveyor according to any one of Claims 1 to 10,
characterised in that the braking elements (10) are made of polyurethane elastomer.

## Revendications

1. Transporteur accumulateur à rouleaux, comportant des rouleaux de support entraînés (1) pour la matière transportée et des éléments de freinage (10) pouvant être appliqués contre les rouleaux de support par des moyens de réglage et être libérés de ceux-ci, éléments qui sont fixés sur des éléments de support (11) et s'appuient sur les éléments de support, les éléments de freinage, pour freiner les rouleaux de support, pouvant être déplacés, à chaque fois, sur une voie de déplacement, du type excentrique, prédéfinie, dans le sens de rotation des rouleaux de support et contre leur surface,
caractérisé en ce que les éléments de freinage (10) sont tout d'abord déplacés généralement en direction de la surface du rouleau de support (1) et ensuite généralement tangentiellement à la surface du rouleau de support (1), et sont comprimés entre la surface du rouleau de support (1) et l'élément de support (11) au moins dans la dernière phase du mouvement effectuée généralement tangentiellement à la surface des rouleaux de support (1).

2. Transporteur accumulateur à rouleaux selon la revendication 1,
caractérisé en ce que les éléments de freinage (10) peuvent être déplacés par un entraînement excentrique pour freiner les rouleaux de support (1).

3. Transporteur accumulateur à rouleaux selon la revendication 2,
caractérisé en ce que chaque entraînement excentrique est constitué généralement d'un disque d'excentrique (13) et d'un levier (7) s'engageant radialement sur celui-ci, dont l'extrémité éloignée du disque d'excentrique (13) est reliée à un moyen d'entraînement linéaire pour faire tourner le disque d'excentrique (13).

4. Transporteur accumulateur à rouleaux selon une des revendications 1 à 3,
caractérisé en ce que les éléments de freinage (10) peuvent être appliqués, à chaque fois, contre les moitiés, éloignées de la matière transportée (4), des rouleaux de support (1) et généralement contre le côté arrière, dans la direction de transport (F), des rouleaux de support (1).

5. Transporteur accumulateur à rouleaux selon une des revendications 1 à 4,
caractérisé en ce que plusieurs éléments de freinage (10), successifs dans la direction de transport (F), sont agencés sur un élément de support commun (11), qui est réalisé comme barrette (9) s'étendant dans la direction de transport (F) et s'étendant au-dessous des rouleaux de support (1), et le mouvement généralement tangentiel des éléments de freinage (10) est orienté parallèlement à la direction de transport (F).

6. Transporteur accumulateur à rouleaux selon la revendication 5,
caractérisé en ce que, pour chaque élément de support (11), il est prévu deux entraînements excentriques écartés l'un de l'autre dans la direction de transport.

7. Transporteur accumulateur à rouleaux selon une des revendications 1 à 6,
caractérisé en ce qu'au moins une ouverture (14) pour recevoir un disque d'excentrique (13) est prévue dans l'élément de support (11).

8. Transporteur accumulateur à rouleaux selon la revendication 7,
caractérisé en ce que l'ouverture (14) dans l'élément de support (11) est réalisée comme trou oblong, dont l'extension longitudinale est orientée parallèlement à la direction de déplacement tangentielle de l'élément de support (11), et l'élément de support (11) est précontraint dans la direction de transport par l'intermédiaire d'un élément élastique (8) s'engageant sur le disque d'excentrique (13).

9. Transporteur accumulateur à rouleaux selon une des revendications 1 à 8,
caractérisé en ce que la surface de freinage, en regard du rouleau de support (11), de l'élément de freinage (10) monte à l'encontre du sens de rotation (d) du rouleau de support (1) et par rapport au mouvement généralement tangentiel de l'élément de support (11).

10. Transporteur accumulateur à rouleaux selon la revendication 9,
caractérisé en ce que l'angle (a) défini par la surface de freinage, en regard du rouleau de support (1), de l'élément de freinage (10) et la direction de déplacement généralement tangentielle de l'élément de support (11) vaut environ entre 5° et 10°.

11. Transporteur accumulateur à rouleaux selon une des revendications 1 à 10,
caractérisé en ce que les éléments de freinage (10) sont fabriqués en un élastomère de polyuréthane.
